(19) Europäisches Patentamt
European Patent Office
Office européen des brevets

(11) **EP 3 735 530 B1**

(12) **EUROPÄISCHE PATENTSCHRIFT**

(45) Veröffentlichungstag und Bekanntmachung des Hinweises auf die Patenterteilung:
**08.12.2021  Patentblatt 2021/49**

(21) Anmeldenummer: **19705314.3**

(22) Anmeldetag: **11.02.2019**

(51) Int Cl.:
**F03D 1/06** $^{(2006.01)}$

(86) Internationale Anmeldenummer:
**PCT/EP2019/053226**

(87) Internationale Veröffentlichungsnummer:
**WO 2019/162114 (29.08.2019 Gazette 2019/35)**

(54) **ROTORBLATT FÜR EINE WINDENERGIEANLAGE UND VERFAHREN**

ROTOR BLADE FOR A WIND TURBINE AND METHOD

PALE DE ROTOR POUR ÉOLIENNE ET PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.02.2018  DE 102018103732**

(43) Veröffentlichungstag der Anmeldung:
**11.11.2020  Patentblatt 2020/46**

(73) Patentinhaber: **Wobben Properties GmbH**
**26607 Aurich (DE)**

(72) Erfinder:
• **MESSING, Ralf**
**26605 Aurich (DE)**
• **KIMILLI, Mustafa Onur**
**81371 München (DE)**

(74) Vertreter: **Eisenführ Speiser**
**Patentanwälte Rechtsanwälte PartGmbB**
**Postfach 31 02 60**
**80102 München (DE)**

(56) Entgegenhaltungen:
**EP-A1- 1 978 245      EP-A2- 2 634 417**
**WO-A2-2010/086297    ES-A1- 2 510 893**
**FR-A- 1 187 166**

**Beschreibung**

Die vorliegende Erfindung betrifft ein Rotorblatt für eine Windenergieanlage, eine Windenergieanlage, einen Windpark sowie ein Verfahren zur Auslegung eines zweigeteilten Rotorblatts.

Windenergieanlagen der eingangs genannten Art sind bekannt. Der derzeit gängigste Typ einer Windenergieanlage ist die sogenannte Horizontalachsen-Windenergieanlage, die üblicherweise mit drei Rotorblättern ausgestattet ist, wobei auch Windenergieanlagen mit einem, zwei, vier oder mehr Rotorblättern möglich sind. Derartige Windenergieanlagen weisen zunehmend größere Bauweisen auf, um einerseits eine höhere Nennleistung erreichen zu können und andererseits eine bessere Windausnutzung zu ermöglichen, wobei letztlich eine Steigerung der Wirtschaftlichkeit von Windenergieanlagen das Ziel ist.

Größere Bauweisen von Windenergieanlagen können beispielsweise größere Nabenhöhen oder größere Rotordurchmesser bzw. Rotorblattlängen aufweisen. In Folge dessen können derartige Windenergieanlagen größere Generatoren und/oder größere Einspeiseleistungen aufweisen. Insbesondere die größeren Rotordurchmesser resultieren jedoch auch ganz allgemein in größeren Kräften und Momenten an der Windenergieanlage. Die größeren Kräfte werden beispielsweise durch die größeren Fliehkräfte und/oder Biegemomente der längeren Rotorblätter verursacht.

Da Rotorblätter in der Regel von einem Produktionsstandort zu einem Aufstellort der Windenergieanlage transportiert und dort an der Nabe montiert werden, ist häufig die Verwendung geteilter Rotorblätter, insbesondere bei Rotorblättern mit großen Längserstreckungen, erforderlich bzw. vorteilhaft. Geteilte Rotorblätter sind einfacher zu transportieren als ungeteilte Rotorblätter. Geteilte Rotorblätter, die also in Längsrichtung zwei oder mehrere benachbarte Abschnitte aufweisen, sind beispielsweise aus der DE 10 2014 206 670 A1 bekannt. Insbesondere bei Aufstellorten in Waldgebieten oder bergigen Regionen können geteilte Rotorblätter erforderlich sein, damit ein Transport zum Aufstellort überhaupt möglich ist. Ein weiteres Beispiel des Standes der Technik ist aus WO2010/086297 bekannt, das ebenfalls Geteilte Rotorblätter zeigt.

Ein Nachteil von konventionellen, zweigeteilten Rotorblättern ist es, dass diese aufgrund der Trennstelle kein oder ein lediglich eingeschränkt aerodynamisch optimales Profil aufweisen. Aufgrund dessen wird der Wirkungsgrad bzw. der Ertrag der Windenergieanlage reduziert und des Weiteren Kraft- und/oder Momentenverläufe negativ beeinflusst.

Das Deutsche Patent- und Markenamt hat in der Prioritätsanmeldung zur vorliegenden Anmeldung folgenden Stand der Technik, recherchiert: DE 10 2012 206 109 B3; DE 10 2015 116 634 A1 und DE 10 2016 201 114 A1.

Es ist daher eine Aufgabe der vorliegenden Erfindung ein Rotorblatt für eine Windenergieanlage, eine Windenergieanlage, einen Windpark sowie ein Verfahren zur Auslegung eines zweigeteilten Rotorblatts bereitzustellen, die einen oder mehrere der genannten Nachteile vermindern oder beseitigen. Darüber hinaus ist es eine Aufgabe der Erfindung, eine Lösung bereitzustellen, die die Anlagenlasten an einer Windenergieanlage reduziert und/oder einen Ertrag einer Windenergieanlage steigert. Gemäß einem ersten Aspekt der vorliegenden Erfindung wird die eingangs genannte Aufgabe gelöst durch ein Rotorblatt für eine Windenergieanlage, das sich in Längsrichtung von einem Blattanschluss zu einer Blattspitze mit einer variablen Profiltiefe erstreckt, wobei das Rotorblatt an einer Trennstelle geteilt ist und an der Trennstelle eine Trennstellen-Profiltiefe aufweist, eine relative Blattlänge des Rotorblatts ausgehend von dem Blattanschluss in einem Blattlängen-Wertebereich zwischen 0% bis 100% definiert ist, die Trennstelle in einem Blattlängen-Wertebereich zwischen 25% und 50% angeordnet ist, ein blattanschlusszugewandter Rotorblattabschnitt und ein blattanschlussabgewandter Rotorblattabschnitt für einen bestimmungsgemäßen Betrieb des Rotorblatts an der Trennstelle verbindbar sind, ein Tiefenverhältnis aus der variablen Profiltiefe und der Trennstellen-Profiltiefe definiert ist, eine Entwicklungsmaßzahl als ein Gradient des Tiefenverhältnisses in Richtung der relativen Blattlänge definiert ist, und die Entwicklungsmaßzahl im Bereich der Trennstelle kleiner -1 ist.

Das Rotorblatt weist vorzugsweise eine idealisiert flächige Erstreckung auf, die durch eine Längserstreckung in Längsrichtung sowie durch die im Wesentlichen orthogonal hierzu verlaufende Profiltiefe gebildet wird. Die Profiltiefe beschreibt insbesondere die Erstreckung des Rotorblatts von einer Vorderkante zu einer Hinterkante des Rotorblatts. Die Profiltiefe ist demzufolge variabel ausgestaltet, da die Erstreckung des Rotorblattes in Richtung der Profiltiefe im Wesentlichen nicht konstant ist. Nichtsdestotrotz kann das Rotorblatt auch Abschnitte aufweisen, in denen die Profiltiefe im Wesentlichen konstant ist. Orthogonal zur Längserstreckung und orthogonal zur Profiltiefe weist das Rotorblatt eine Rotorblattdicke auf.

Das Rotorblatt ist entlang der Längsrichtung in zwei Abschnitte geteilt, die an der Trennstelle aneinanderstoßen. Die Trennstelle kann sich vollständig oder abschnittsweise im Wesentlichen orthogonal zu der Längsrichtung des Rotorblatts erstrecken. Die Trennstelle weist vorzugsweise eine Teilungsebene auf, die einer Stoßfläche eines oder beider Rotorblattabschnitts bzw. Rotorblattabschnitte entspricht. Die Trennstelle kann derart angeordnet sein, dass die Längsrichtung des Rotorblatts parallel zu einer Flächenorthogonalen der Teilungsebene der Trennstelle ausgerichtet ist. Die Teilungsebene weist in diesem Fall im Wesentlichen Erstreckungen in Richtung der Profiltiefe und der Rotorblattdicke auf.

Alternativ oder zusätzlich ist es bevorzugt, dass die Teilungsebene der Trennstelle vollständig oder abschnittsweise geneigt zur Längsrichtung des Rotorblatts ausgerichtet ist. Eine geneigte Teilungsebene der Trennstelle bedeutet insbesondere, dass sich die Teilungsebene einerseits in Richtung der Rotorblattdicke erstreckt, jedoch zudem auch in Längsrichtung des Rotorblatts und in Richtung der Profiltiefe. Darüber hinaus kann die Trennstelle auch weitere Geometrien aufweisen, beispielsweise kann sich diese zickzackförmig erstrecken.

Die variable Profiltiefe nimmt an der Trennstelle einen Wert, nämlich die Trennstellen-Profiltiefe, an. Sollte der Verlauf der Trennstelle keinen konkreten Wert zur Ermittlung der Profiltiefe ermöglichen bzw. mehrere Werte für die Trennstellen-Profiltiefe ermöglichen, ist es bevorzugt, einen Mittelwert aus den möglichen Trennstellen-Profiltiefen zu bilden. Dies kann beispielsweise bei geneigten Teilungsebenen oder zickzackförmigen Trennstellen der Fall sein. Darüber hinaus kann auch eine minimale Trennstellen-Profiltiefe oder eine maximale Trennstellen-Profiltiefe verwendet werden.

Die relative Blattlänge nimmt stets einen Blattlängen-Wert zwischen 0% und 100% ein. Ein Blattlängen-Wert von 0% ist vorzugsweise dem Blattanschluss zugeordnet. Ein Blattlängen-Wert von 100% ist ferner vorzugsweise der Blattspitze zugeordnet. Die Trennstelle ist in einem Blattlängen-Wertebereich zwischen 25% und 50% angeordnet.

Das heißt bei einem Rotorblatt, das beispielsweise eine Länge von 50 Metern aufweist, ist die Trennstelle zwischen 10 Metern und 20 Metern von dem Blattanschluss beabstandet.

Durch die Teilung des Rotorblatts weist das Rotorblatt im Wesentlichen zwei Rotorblattabschnitte auf, nämlich den blattanschlusszugewandten Rotorblattabschnitt und den blattanschlussabgewandten Rotorblattabschnitt. Der blattanschlusszugewandte Rotorblattabschnitt ist der Rotorblattabschnitt, der einerseits an die Trennstelle angrenzt und darüber hinaus den Blattanschluss aufweist bzw. diesem zugewandt ist. Der blattanschlusszugewandte Rotorblattabschnitt ist im bestimmungsgemäßen Betrieb des Rotorblatts zudem einer Nabe einer Windenergieanlage zugewandt und umfasst somit das proximale Ende des Rotorblatts. Der blattanschlussabgewandte Rotorblattabschnitt ist derjenige Rotorblattabschnitt, der einerseits an die Trennstelle angrenzt und darüber hinaus die Blattspitze aufweist bzw. an diese Blattspitze angrenzt. Der blattanschlussabgewandte Rotorblattabschnitt umfasst somit das distale Ende des Rotorblatts.

Das Tiefenverhältnis ergibt sich aus der variablen Profiltiefe und der Trennstellen-Profiltiefe. Das Tiefenverhältnis wird somit aus der veränderlichen Profiltiefe und der konstanten Trennstellen-Profiltiefe bestimmt. An der Trennstelle an sich ist das Tiefenverhältnis somit in der Regel stets gleich 1. Im Allgemeinen weist das Tiefenverhältnis in dem Blattlängen-Wertebereich von 0% bis zur Trennstelle einen Wert von größer als 1 auf. Im Bereich von der Trennstelle zu einem Blattlängen-Wert von 100% weist das Tiefenverhältnis in der Regel einen Wert von kleiner als 1 auf.

Die Entwicklungsmaßzahl ermittelt sich als ein Gradient des Tiefenverhältnisses in Richtung der relativen Blattlänge. Die Entwicklungsmaßzahl errechnet sich somit insbesondere durch die Ableitung des Tiefenverhältnisses nach der relativen Blattlänge. Im Bereich der Trennstelle ist die Entwicklungsmaßzahl kleiner -1. Das bedeutet, dass das Tiefenverhältnis im Bereich der Trennstelle vergleichsweise stark abnimmt.

Der Erfindung liegt unter anderem die Erkenntnis zugrunde, dass bei geteilten Rotorblättern durch zügige Abnahme der Profiltiefe von der Trennstelle zur Blattspitze hin die Anlagenlasten reduziert werden. Für die Montage ist an der Trennstelle jedoch eine minimale absolute Blattdicke einzuhalten, die den aerodynamischen Entwurf des Rotorblattes beeinflusst. Um den logistischen Vorteil des geteilten Rotorblattes effektiv nutzen zu können, ohne dies mit dem Nachteil stark erhöhter Anlagenlasten wieder zu vermindern, wird eine Entwicklungsmaßzahl im Bereich der Trennstelle von kleiner als -1 vorgeschlagen.

Der Bereich der Trennstelle kann sich unter anderem in Längsrichtung des Rotorblattes erstrecken. Vorzugsweise erstreckt sich der Bereich der Trennstelle in Längsrichtung des Rotorblattes von einer unteren Bereichsgrenze, die dem Blattanschluss zugewandt ist, zu einer oberen Bereichsgrenze, die dem Blattanschluss abgewandt ist. Die untere Bereichsgrenze ist vorzugsweise von der Trennstelle in Richtung des Blattanschlusses mit einer Erstreckung beabstandet, die kleiner als 0,1%, 0,5%, 1%, 2%, 5% und/oder 7% der relativen Blattlänge ist. Die obere Bereichsgrenze ist vorzugsweise von der Trennstelle in Richtung der Blattspitze mit einer Erstreckung beabstandet, die kleiner als 0,1%, 0,5%, 1%, 2%, 5% und/oder 7% der relativen Blattlänge ist.

Gemäß einer weiteren bevorzugten Ausführungsvariante des Rotorblatts ist vorgesehen, dass die Trennstelle in einem Blattlängen-Wertebereich zwischen 32% und 40% angeordnet ist.

Der Erfindung liegt darüber hinaus die Erkenntnis zugrunde, dass es vorteilhaft ist, die Profiltiefe im blattanschlussabgewandten Rotorblattabschnitt so schnell wie möglich zu reduzieren, um strukturelle Verbesserungen an dem Rotorblatt realisieren zu können. Insbesondere kann damit der Nachteil einer erhöhten Rotorblattmasse von geteilten Rotorblättern kompensiert werden. Ferner wird der Wirkungsgrad des Rotorblatts verbessert, sodass der Ertrag gesteigert werden kann.

Darüber hinaus liegt der Erfindung die Erkenntnis zugrunde, dass eine Verringerung der relativen Rotorblattdicke, also einem Verhältnis aus Rotorblattdicke zu Profiltiefe, in aerodynamischen Vorteilen resultiert. Vorzugsweise liegt die relative Rotorblattdicke an der Trennstelle im Dickenbereich von 0,4 bis 0,5. Ferner vorzugsweise wird eine Konstruktionsmaßzahl als bestimmtes Integral der relativen Rotorblattdicke über einen Bereich der relativen Blattlänge definiert, wobei eine untere Grenze des Integrals auf eine Position von 20% der relativen Blattlänge festgelegt und die Konstruktionsmaßzahl für beliebige Werte der oberen Grenze auswertbar ist, wobei die Konstruktionsmaßzahl für eine obere Grenze von 45% der relativen Blattlänge mindestens 0,1 beträgt und/oder die Konstruktionsmaßzahl für eine obere Grenze von 80% der relativen Blattlänge mindestens 0,2 beträgt.

In einer bevorzugten Ausführungsvariante des Rotorblatts ist vorgesehen, dass die Entwicklungsmaßzahl im Blattlängen-Wertebereich zwischen 25% und 50%, insbesondere im Blattlängen-Wertebereich zwischen 32% und 40%, im Bereich der Trennstelle minimal ist. Im Bereich der Trennstelle weist die Entwicklungsmaßzahl in dieser Ausführungsvariante somit ein lokales Minimum auf. Unbeschadet sind dahingehend Entwicklungsmaßzahlen von anderen Rotorblattabschnitten möglich, die einen Wert annehmen, der kleiner ist als der Wert an der Trennstelle, solange diese Rotorblattabschnitte nicht im Blattlängen-Wertebereich zwischen 25% und 50% liegen. Durch die geringe Entwicklungsmaßzahl im Blattlängen-Wertebereich zwischen 25% und 50% wird ein aerodynamisch vorteilhaftes Rotorblatt erreicht. Insbesondere werden bei diesem Rotorblatt die Anlagenlasten vorteilhaft reduziert.

Gemäß einer weiteren bevorzugten Ausführungsvariante des Rotorblatts ist vorgesehen, dass die Entwicklungsmaßzahl im Bereich der Trennstelle in einem Maßzahl-Wertebereich zwischen -3 und -1, besonders bevorzugt in einem Maßzahl-Wertebereich zwischen -2,5 und -2, liegt. Ferner kann die Entwicklungsmaßzahl im Blattlängen-Wertebereich zwischen 50% und 90%, insbesondere zwischen 55% und 80%, einen ansteigenden Wert aufweisen. Des Weiteren ist es bevorzugt, dass die Entwicklungsmaßzahl im Blattlängen-Wertebereich zwischen 25% und 50%, insbesondere zwischen 32% und 40%, kleiner als -1 ist. Ferner kann es bevorzugt sein, dass die Entwicklungsmaßzahl im Blattlängen-Wertebereich zwischen 25% und 50%, insbesondere zwischen 32% und 40%, kleiner als -1,5, und/oder -2, und/oder -2,2, und/oder -2,4 ist.

Eine weitere bevorzugte Fortbildung des Rotorblatts zeichnet sich dadurch aus, dass im Blattlängen-Wertebereich zwischen 60% und 80% die Entwicklungsmaßzahl im Maßzahl-Wertebereich zwischen -1,1 und -0,5 liegt. Es ist ferner bevorzugt, dass die Entwicklungsmaßzahl von der relativen Blattlänge von 25% hin zu der Trennstelle abnimmt und/oder die Entwicklungsmaßzahl von der Trennstelle hin zu der relativen Blattlänge von 90% zunimmt. Ein Rotorblatt mit einer Entwicklungsmaßzahl nach einer oder mehrerer der im Vorherigen beschriebenen Ausführungsvarianten resultiert in einem weiter optimierten Rotorblatt. Insbesondere führt jede einzelne Ausführungsvariante zu einer verbesserten Aerodynamik des Rotorblatts. Infolgedessen sind die Anlagenlasten weiter reduziert. Gleichzeitig kann die Festigkeit des Rotorblatts verbessert und/oder der Ertrag gesteigert werden.

In einer weiteren Ausführungsform kann das Tiefenverhältnis im Blattlängen-Wertebereich zwischen 5% und 20%, insbesondere zwischen 10% und 20%, in einem Tiefen-Wertebereich zwischen 1,1 und 1,3, insbesondere zwischen 1,15 und 1,25, liegen, und/oder das Tiefenverhältnis im Blattlängen-Wertebereich zwischen 90% und 100%, insbesondere zwischen 95% und 100%, in einem Tiefen-Wertebereich zwischen 0,1 und 0,2 liegen, und/oder das Tiefenverhältnis im Blattlängen-Wertebereich zwischen 40% und 70%, in einem Tiefen-Wertebereich zwischen 0,4 und 0,75 liegen.

In einer bevorzugten Ausführungsvariante des Rotorblatts ist ferner vorgesehen, dass eine Längserstreckung des Rotorblatts in Längsrichtung mindestens 40 Meter beträgt. Darüber hinaus kann eine Längserstreckung des Rotorblatts in Längsrichtung mindestens 40 Meter betragen. Ferner ist das Rotorblatt nach einer oder mehrerer der im Vorherigen genannten Ausführungsvarianten insbesondere geeignet, um in Kombination mit den weiteren notwendigen Komponenten eine Schwachwind-Windenergieanlage auszubilden. Vorzugsweise handelt es sich um ein Schwachwind-Rotorblatt, wobei das Rotorblatt vorzugsweise derart ausgebildet ist, dass es für eine Windenergieanlage mit einer Nennleistung von größer oder gleich 4 Megawatt geeignet ist.

Gemäß einem weiteren Aspekt der vorliegenden Erfindung wird die Aufgabe gelöst durch eine Windenergieanlage mit mindestens einem Rotorblatt nach einer der im Vorhergehenden beschriebenen Ausführungsvarianten. Vorzugsweise ist die Windenergieanlage als Schwachwind-Windenergieanlage ausgebildet. Darüber hinaus kann die Windenergieanlage eine Nennleistung von größer oder gleich 4 Megawatt aufweisen.

Ferner wird die Aufgabe gelöst durch einen Windpark mit zwei oder mehreren Windenergieanlagen nach dem vorhergehenden Anspruch. Der Windpark kann eine, zwei oder mehrere Schwachwind-Windenergieanlagen umfassen. Des Weiteren ist es bevorzugt, dass mindestens eine der zwei oder mehreren Windenergieanlagen eine Nennleistung von größer oder gleich 4 Megawatt aufweist.

Gemäß einem weiteren Aspekt wird die eingangs genannte Aufgabe gelöst durch ein Verfahren zur Auslegung eines zweigeteilten Rotorblatts für eine Windenergieanlage, das sich in Längsrichtung von einem Blattanschluss zu einer Blattspitze mit einer variablen Profiltiefe erstreckt, wobei das Rotorblatt in Längsrichtung an einer Trennstelle geteilt ist und an der Trennstelle eine Trennstellen-Profiltiefe aufweist, eine relative Blattlänge des Rotorblatts ausgehend von dem Blattanschluss in einem Blattlängen-Wertebereich zwischen 0% bis 100% definiert ist, ein blattanschlusszugewandter Rotorblattabschnitt und ein blattanschlussabgewandter Rotorblattabschnitt für einen bestimmungsgemäßen Betrieb des Rotorblatts an der Trennstelle verbindbar sind, ein Tiefenverhältnis aus der Profiltiefe und der Trennstellen-Profiltiefe definiert ist, umfassend Festlegen der Trennstelle in einem Blattlängen-Wertebereich zwischen 25% und 50%, und Verwenden einer Entwicklungsmaßzahl, die als ein Gradient des Tiefenverhältnisses in Richtung der relativen Blattlänge definiert ist, wobei die Entwicklungsmaßzahl im Bereich der Trennstelle kleiner -1 ist.

Des Weiteren ist es bevorzugt, dass die Entwicklungsmaßzahl im Blattlängen-Wertebereich zwischen 25% und 50% im Bereich der Trennstelle minimal ist.

In einer weiteren bevorzugten Ausführungsvariante des Verfahrens ist vorgesehen, dass im Blattlängen-Wertebereich zwischen 50% und 90%, insbesondere zwischen 55% und 80%, einen ansteigenden Wert aufweist, und/oder im Bereich der Trennstelle in einem Maßzahl-Wertebereich zwischen -3 und -1, besonders bevorzugt in einen Maßzahl-Wertebereich zwischen -2,5 und -2, liegt.

Der Bereich der Trennstelle kann sich unter anderem in Längsrichtung des Rotorblattes erstrecken. Vorzugsweise erstreckt sich der Bereich der Trennstelle in Längsrichtung des Rotorblattes von einer unteren Bereichsgrenze, die dem Blattanschluss zugewandt ist, zu einer oberen Bereichsgrenze, die dem Blattanschluss abgewandt ist. Die untere Bereichsgrenze ist vorzugsweise von der Trennstelle in Richtung des Blattanschlusses mit einer Erstreckung beabstandet, die kleiner als 0,1%, 0,5%, 1%, 2%, 5% und/oder 7% der relativen Blattlänge ist. Die obere Bereichsgrenze ist vorzugsweise von der Trennstelle in Richtung der Blattspitze mit einer Erstreckung beabstandet, die kleiner als 0,1%, 0,5%, 1%, 2%, 5% und/oder 7% der relativen Blattlänge ist.

Des Weiteren kann es bevorzugt sein, dass im Blattlängen-Wertebereich zwischen 60% und 80% die Entwicklungsmaßzahl im Maßzahl-Wertebereich zwischen -1,1 und -0,5 liegt.

Es ist ferner bevorzugt, dass die Entwicklungsmaßzahl von der relativen Blattlänge von 20%, insbesondere von 25%, hin zu der Trennstelle abnimmt, und/oder die Entwicklungsmaßzahl von der Trennstelle hin zu der relativen Blattlänge von 90% zunimmt.

Das erfindungsgemäße Verfahren und seine möglichen Fortbildungen weisen Merkmale bzw. Verfahrensschritte auf, die sie insbesondere dafür geeignet machen, für ein erfindungsgemäßes Rotorblatt und seine Fortbildungen verwendet zu werden. Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen des Rotorblatts verwiesen.

Weitere Vorteile und bevorzugte Ausgestaltungen werden im Folgenden mit Verweis auf die Ausführungsbeispiele der beigefügten Figuren genauer beschrieben. Hierbei zeigen:

Fig. 1 schematisch und exemplarisch eine Windenergieanlage,

Fig. 2 schematisch und exemplarisch eine Draufsicht eines Rotorblatts,

Fig. 3 schematisch und exemplarisch eine Querschnittsansicht des Rotorblatts aus Fig. 2,

Fig. 4 schematisch und exemplarisch ein Verlauf eines Tiefenverhältnisses über die mit der maximalen Rotorblattlänge normierten Blattlänge von Rotorblättern, und

Fig. 5 schematische und exemplarische Verläufe von Entwicklungsmaßzahlen über die mit der maximalen Rotorblattlänge normierten Blattlänge von Rotorblättern.

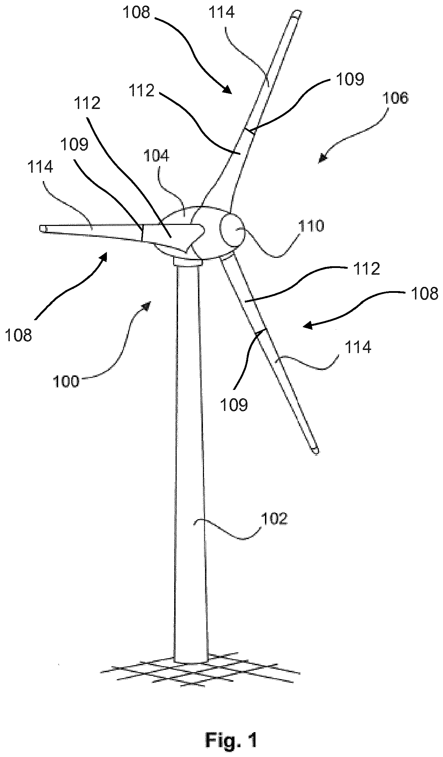

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Der Spinner 110 umhüllt eine nicht gezeigte Rotornabe des Rotors 106.

Die Rotorblätter 108 sind jeweils zweigeteilt und weisen eine Trennstelle 109 auf. An der Trennstelle 109 stoßen jeweils ein blattanschlusszugewandter Rotorblattabschnitt 112 und ein blattanschlussabgewandter Rotorblattabschnitt 114 aneinander. Ein Rotorblatt 108 wird im Wesentlichen durch den blattanschlusszugewandten Rotorblattabschnitt 112 und den blattanschlussabgewandten Rotorblattabschnitt 114 ausgebildet. In bevorzugten Ausführungsvarianten der Rotorblätter 108 besteht auch die Möglichkeit, zwei oder mehr Trennstellen 109 je Rotorblatt 108 vorzusehen.

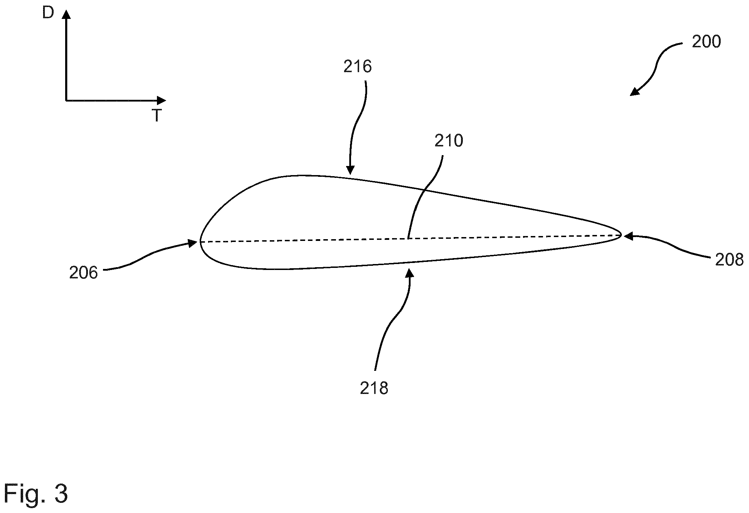

Geteilte Rotorblätter 108 sind einfacher zu transportieren als ungeteilte Rotorblätter 108 und bieten ferner auch Vorteile in der Produktion, beispielsweise durch den Einsatz der Wickeltechnik. Insbesondere ist es bevorzugt, dass die blattanschlusszugewandten Rotorblattabschnitte 112 mittels der Wickeltechnik hergestellt werden, womit eine schnelle und kostengünstige Produktion ermöglicht wird. Ein bekannter Nachteil derart geteilter Rotorblätter 108 ist jedoch die in der Regel höhere Gesamtmasse des Rotorblattes 108 im Vergleich zu ungeteilten Rotorblättern ähnlicher Ausmaße. Insbesondere ist es bevorzugt, dass der blattanschlussabgewandte Rotorblattabschnitt 114 ein geringes Gewicht aufweist. Der blattanschlusszugewandte Rotorblattabschnitt 112 und der blattanschlussabgewandte Rotorblattabschnitt 114 können beispielsweise blattinnenseitig miteinander verbunden werden, wobei insbesondere Schraubverbindungen bevorzugt sind. Damit eine derartige Verbindung in der Praxis realisiert werden kann, ist es besonders bevorzugt, dass das Rotorblatt 108 an der Trennstelle 109 eine Rotorblattdicke von 1,7 bis 1,8 Metern aufweist. Zur Definition der Rotorblattdicke wird auf die folgende Beschreibung der Fig. 3 verwiesen. Die Ausdehnung beträgt insbesondere im Inneren des Rotorblattes in Richtung der Rotorblattdichte vorzugsweise 1,7 m oder mehr, um eine einfache Montage zu ermöglichen.

Die Rotorblätter 108 wurden vorzugsweise mit einer Entwicklungsmaßzahl ausgelegt. Die Entwicklungsmaßzahl ergibt sich aus dem Gradienten eines Tiefenverhältnisses in Richtung der relativen Blattlänge. Das Tiefenverhältnis ergibt sich aus der variablen Profiltiefe zu der Trennstellen-Profiltiefe.

Erfindungsgemäß hat sich als besonders bevorzugt herausgestellt, die Entwicklungsmaßzahl im Bereich der Trennstelle 109 derart auszulegen, dass diese einen Wert von kleiner als -1 annimmt. Ein derartiges Rotorblatt 108 weist einen Profiltiefenverlauf auf, der eine starke Abnahme der Profiltiefe im Bereich der Trennstelle aufweist. Dies ermöglicht ein Rotorblatt zu erhalten, das sowohl die zu erwartenden Anlagenlasten, die aerodynamische Wirksamkeit, aber auch die Gesamtmasse des Rotorblattes 108 als Ganzes angemessen berücksichtigt.

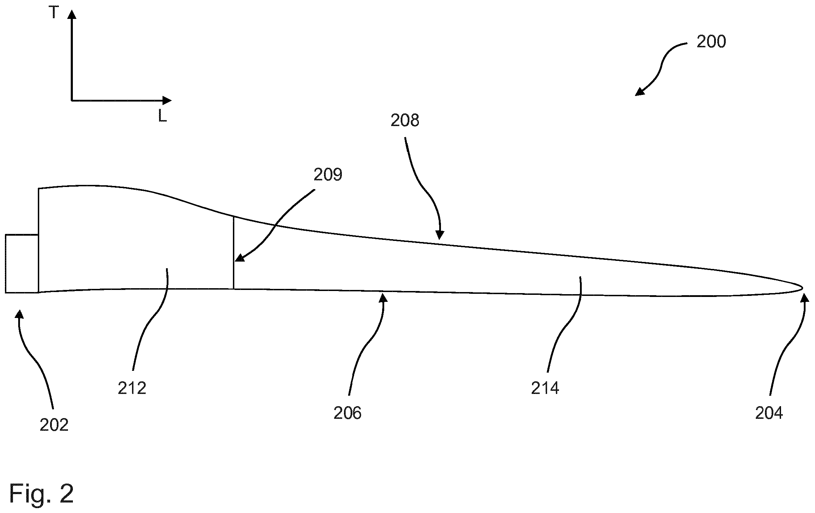

Fig. 2 zeigt eine exemplarische und schematische Darstellung einer weiteren bevorzugten Ausführungsvariante eines Rotorblattes 200. Das Rotorblatt 200 erstreckt sich in Längsrichtung L von einem Blattanschluss 202 zu einer Blattspitze 204. Es handelt sich vorliegend um ein zweigeteiltes Rotorblatt, das eine Trennstelle 209 aufweist. Der Abschnitt des Rotorblatts 200, der an die Trennstelle 209 und an den Blattanschluss 202 angrenzt bzw. den Blattanschluss 202 umfasst, ist der blattanschlusszugewandte Rotorblattabschnitt 212. Der weitere Rotorblattabschnitt, der dem Blattanschluss abgewandt ist und an die Blattspitze 204 angrenzt bzw. die Blattspitze 204 umfasst, ist der blattanschlussabgewandte Rotorblattabschnitt 214. In Richtung der Profiltiefe T erstreckt sich das Rotorblatt von einer Vorderkante 206 zu einer Hinterkante 208. Die Profiltiefe entspricht in der Regel der Beabstandung von der Vorderkante 206 zu der Hinterkante 208. Bei dem Rotorblatt 200 der Fig. 2 kann es sich beispielsweise um eine der Rotorblätter 108 der Fig. 1 handeln.

Der in Fig. 3 gezeigte Querschnitt des Rotorblatts 200 repräsentiert einen Querschnitt im Bereich der Trennstelle. Die an der Trennstelle vorherrschende Profiltiefe ist die Trennstellen-Profiltiefe 210. Durch die entsprechende geometrische Gestaltung des Rotorblattes 200 weist das Rotorblatt eine Saugseite 216 und eine Druckseite 218 auf. Orthogonal zur Richtung der Profiltiefe T des Rotorblattes 200 und der Längsrichtung L des Rotorblattes 200 verläuft die Rotorblattdicke D. Es sollte beachtet werden, dass im Bereich der Trennstelle abweichend von dem in Fig. 3 gezeigten Beispiel des Rotorblattes 200 auch Profile mit stumpfen oder dicken Hinterkanten, sogenannte Flatback-Profile, Verwendung finden.

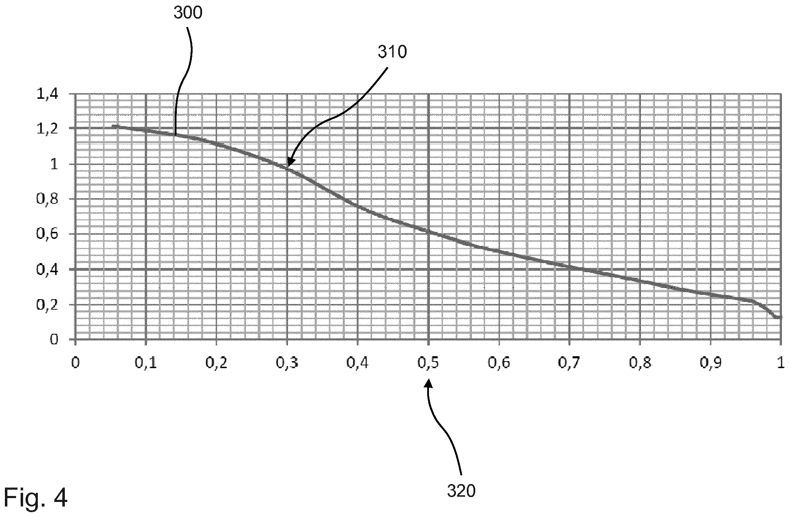

Der Verlauf des Tiefenverhältnisses 300 in Fig. 4 zeigt einen abnehmenden Verlauf entlang der Rotorblattlängsrichtung von dem Blattanschluss hin zur Blattspitze. Im dargestellten Diagramm ist die Längserstreckung des Rotorblattes in Längsrichtung in normierter Darstellung dargestellt, so dass eine relative Blattlänge des Rotorblatts ausgehend von dem Blattanschluss in einem Blattlängen-Wertebereich zwischen 0% bis 100% dargestellt ist. Insbesondere ist zu erkennen, dass das Tiefenverhältnis in einem Bereich 310 der Trennstelle im Bereich einer relativen Blattlänge von ca. 28% gleich 1 ist. Das Tiefenverhältnis TV ergibt sich insbesondere aus der folgenden Funktion:

$$TV = \frac{t}{T_{Trennstelle}}$$

Hierbei ist t die Profiltiefe des Rotorblatts 200 an einer relativen Position $x = \frac{r}{R}$ des Rotorblatts, wobei r den absoluten Abstand der relativen Position von dem Blattanschluss 202 und R die absolute Gesamtlänge bzw. die Längserstreckung des Rotorblatts 200 in Längsrichtung L repräsentiert. $T_{Trennstelle}$ ist die Profiltiefe an der Trennstelle.

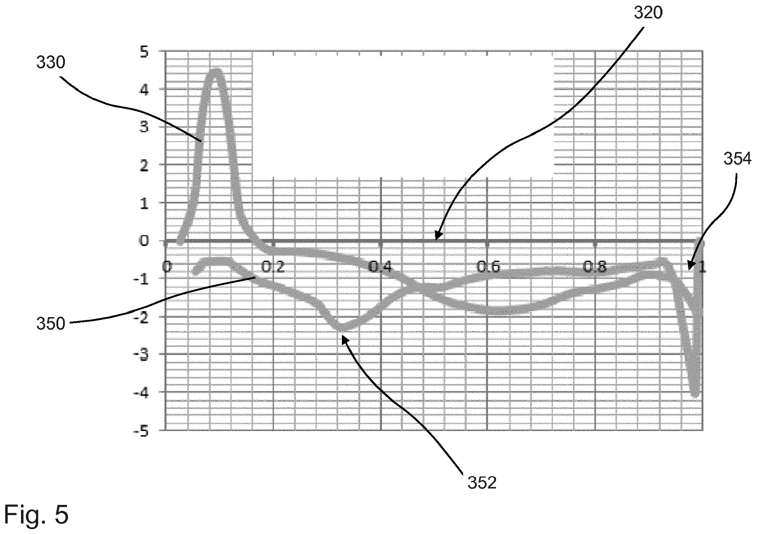

In Fig. 5 sind zwei Verläufe von Entwicklungsmaßzahlen dargestellt. Ein erster Verlauf 330 repräsentiert den Verlauf einer ersten Entwicklungsmaßzahl für ein konventionelles, einteiliges Rotorblatt. Das Tiefenverhältnis, dessen Gradient in Richtung der relativen Blattlänge als die Entwicklungsmaßzahl E definiert ist, ist für den ersten Verlauf 330 in Ermangelung einer tatsächlichen Trennstelle bei einem einteiligen Rotorblatt als Verhältnis aus der variablen Profiltiefe und der Profiltiefe an einer hypothetischen Trennstelle im Bereich einer relativen Blattlänge von etwa 0,3 definiert.

Der zweite Verlauf 350 repräsentiert einen Verlauf einer zweiten Entwicklungsmaßzahl eines erfindungsgemäßen Rotorblatts. Insbesondere ist zu erkennen, dass im Bereich 352 einer Trennstelle ein lokales Minimum der Entwicklungsmaßzahl vorliegt. Lediglich in einem Bereich 354 einer Blattspitze ist der Wert der Entwicklungsmaßzahl noch geringer, was auf die spezifische Ausformung der Blattspitze bzw. des distalen Endes des Rotorblattes zurückzuführen ist. Die Entwicklungsmaßzahl E ergibt sich im Wesentlichen aus dem Gradienten des Tiefenverhältnisses in Richtung der relativen Blattlänge:

$$E = \frac{dTV}{dx} = \frac{d(\frac{t}{T_{Trennstelle}})}{d(\frac{r}{R})}$$

In dem zweiten Verlauf 350 ist ferner zu erkennen, dass die Entwicklungsmaßzahl im Bereich der Trennstelle in einem Maßzahl-Wertebereich zwischen -3 und -1 liegt. Insbesondere liegt die Entwicklungsmaßzahl im Bereich der Trennstelle in einem Maßzahl-Wertebereich zwischen -2,4 und -2,0. In einem Blattlängen-Wertebereich zwischen 50% und 90% zeigt die Entwicklungsmaßzahl einen ansteigenden Wert. Darüber hinaus ist ersichtlich, dass die Entwicklungsmaßzahl im Blattlängen-Wertebereich zwischen 25% und 50%, insbesondere im Blattlängen-Wertebereich zwischen 32% und 40%, kleiner als -1 ist. Der zweite Verlauf 350 weist ferner einen derartigen Verlauf auf, dass im Blattlängen-Wertebereich zwischen 60% und 80% die Entwicklungsmaßzahl im Maßzahl-Wertebereich zwischen -1,1 und -0,5 liegt.

Der Wert der Entwicklungsmaßzahl nimmt ferner von der relativen Blattlänge von 20%, insbesondere von 25%, hin zu der Trennstelle ab. Ferner nimmt die Entwicklungsmaßzahl von der Trennstelle hin zu der relativen Blattlänge von 90% hin zu.

Bezugszeichenliste

| | |
|---|---|
| 100 | Windenergieanlage |
| 102 | Turm |
| 104 | Gondel |
| 106 | Rotor |
| 108, 200 | Rotorblatt |
| 109, 209 | Trennstelle |
| 110 | Spinner |
| 112, 212 | blattanschlusszugewandter Rotorblattabschnitt |
| 114, 214 | blattanschlussabgewandter Rotorblattabschnitt |
| 202 | Blattanschluss |
| 204 | Blattspitze |
| 206 | Vorderkante |
| 208 | Hinterkante |
| 210 | Trennstellen-Profiltiefe |
| 216 | Saugseite |
| 218 | Druckseite |
| 300 | Verlauf des Tiefenverhältnis |
| 310, 352 | Bereich der Trennstelle |
| 320 | Blattlängen-Wertebereich |
| 330 | erster Verlauf der ersten Entwicklungsmaßzahl |
| 350 | zweiter Verlauf der zweiten Entwicklungsmaßzahl |
| 354 | Bereich der Blattspitze |
| D | Rotorblattdicke |
| L | Längsrichtung |
| T | Profiltiefe |

**Patentansprüche**

1. Rotorblatt für eine Windenergieanlage, das sich in Längsrichtung von einem Blattanschluss zu einer Blattspitze mit einer variablen Profiltiefe erstreckt, wobei

- das Rotorblatt an einer Trennstelle geteilt ist und an der Trennstelle eine Trennstellen-Profiltiefe aufweist,
- eine relative Blattlänge des Rotorblatts ausgehend von dem Blattanschluss in einem Blattlängen-Wertebereich zwischen 0% bis 100% definiert ist,
- die Trennstelle in einem Blattlängen-Wertebereich zwischen 25% und 50% angeordnet ist,
- ein blattanschlusszugewandter Rotorblattabschnitt und ein blattanschlussabgewandter Rotorblattabschnitt für einen bestimmungsgemäßen Betrieb des Rotorblatts an der Trennstelle verbindbar sind,
- ein Tiefenverhältnis aus der variablen Profiltiefe und der Trennstellen-Profiltiefe definiert ist, **dadurch gekennzeichnet, dass**:
- eine Entwicklungsmaßzahl als ein Gradient des Tiefenverhältnisses in Richtung der relativen Blattlänge definiert ist, und
- die Entwicklungsmaßzahl im Bereich der Trennstelle kleiner -1 ist.

2. Rotorblatt nach Anspruch 1, wobei

- die Trennstelle in einem Blattlängen-Wertebereich zwischen 32% und 40% angeordnet ist

3. Rotorblatt nach dem vorstehenden Anspruch, wobei

- die Entwicklungsmaßzahl im Blattlängen-Wertebereich zwischen 25% und 50% im Bereich der Trennstelle minimal ist.

4. Rotorblatt nach einem der vorstehenden Ansprüche, wobei

- die Entwicklungsmaßzahl im Bereich der Trennstelle in einem Maßzahl-Wertebereich zwischen -3 und -1, besonders bevorzugt in einem Maßzahl-Wertebereich zwischen -2,5 und -2, liegt, und/oder
- die Entwicklungsmaßzahl im Blattlängen-Wertebereich zwischen 50% und 90%, insbesondere zwischen 55% und 80%, einen ansteigenden Wert aufweist, und/oder
- die Entwicklungsmaßzahl im Blattlängen-Wertebereich zwischen 25% und 50% kleiner als -1 ist.

5. Rotorblatt nach einem der vorstehenden Ansprüche, wobei

- im Blattlängen-Wertebereich zwischen 60% und 80% die Entwicklungsmaßzahl im Maßzahl-Wertebereich zwischen -1,1 und -0,5 liegt.

6. Rotorblatt nach einem der vorstehenden Ansprüche, wobei

- die Entwicklungsmaßzahl von der relativen Blattlänge von 20% hin zu der Trennstelle abnimmt, und/oder

- die Entwicklungsmaßzahl von der Trennstelle hin zu der relativen Blattlänge von 90% zunimmt.

7. Rotorblatt nach einem der vorstehenden Ansprüche, wobei

    - das Tiefenverhältnis im Blattlängen-Wertebereich zwischen 5% und 20%, insbesondere zwischen 10% und 20%, in einem Tiefen-Wertebereich zwischen 1,1 und 1,3, insbesondere zwischen 1,15 und 1,25, liegt, und/oder
    - das Tiefenverhältnis im Blattlängen-Wertebereich zwischen 90% und 100%, insbesondere zwischen 95% und 100%, in einem Tiefen-Wertebereich zwischen 0,1 und 0,2 liegt, und/oder
    - das Tiefenverhältnis im Blattlängen-Wertebereich zwischen 40% und 70%, in einem Tiefen-Wertebereich zwischen 0,4 und 0,75 liegt.

8. Rotorblatt nach einem der vorstehenden Ansprüche, wobei

    - eine Mindestdicke des Rotorblatts im Bereich der Trennstelle mindestens 1,7 Meter beträgt und/oder
    - eine Längserstreckung des Rotorblatts in Längsrichtung mindestens 40 Meter beträgt.

9. Windenergieanlage mit mindestens einem Rotorblatt nach einem der vorstehenden Ansprüche.

10. Windpark mit zwei oder mehreren Windenergieanlagen nach Anspruch 9.

11. Verfahren zur Auslegung eines zweigeteilten Rotorblatts für eine Windenergieanlage, das sich in Längsrichtung von einem Blattanschluss zu einer Blattspitze mit einer variablen Profiltiefe erstreckt, wobei das Rotorblatt in Längsrichtung an einer Trennstelle geteilt ist und an der Trennstelle eine Trennstellen-Profiltiefe aufweist, eine relative Blattlänge des Rotorblatts ausgehend von dem Blattanschluss in einem Blattlängen-Wertebereich zwischen 0% bis 100% definiert ist, ein blattanschlusszugewandter Rotorblattabschnitt und ein blattanschlussabgewandter Rotorblattabschnitt für einen bestimmungsgemäßen Betrieb des Rotorblatts an der Trennstelle verbindbar sind, ein Tiefenverhältnis aus der Profiltiefe und der Trennstellen-Profiltiefe definiert ist, umfassend

    - Festlegen der Trennstelle in einem Blattlängen-Wertebereich zwischen 25% und 50%, und
    - Verwenden einer Entwicklungsmaßzahl, die als ein Gradient des Tiefenverhältnisses in Richtung der relativen Blattlänge definiert ist, wobei die Entwicklungsmaßzahl im Bereich der Trennstelle kleiner -1 ist.

12. Verfahren nach Anspruch 11, wobei

    - die Entwicklungsmaßzahl im Blattlängen-Wertebereich zwischen 25% und 50% im Bereich der Trennstelle minimal ist.

13. Verfahren nach einem der Ansprüche 11-12, wobei die Entwicklungsmaßzahl

    - im Blattlängen-Wertebereich zwischen 50% und 90%, insbesondere zwischen 55% und 80%, einen ansteigenden Wert aufweist, und/oder
    - im Bereich der Trennstelle in einem Maßzahl-Wertebereich zwischen -3 und -1, besonders bevorzugt in einen Maßzahl-Wertebereich zwischen -2,5 und -2, liegt.

14. Verfahren nach einem der Ansprüche 11-13, wobei

    - im Blattlängen-Wertebereich zwischen 60% und 80% die Entwicklungsmaßzahl im Maßzahl-Wertebereich zwischen -1,1 und -0,5 liegt.

15. Verfahren nach einem der Ansprüche 11-14, wobei

    - die Entwicklungsmaßzahl von der relativen Blattlänge von 25% hin zu der Trennstelle abnimmt, und/oder
    - die Entwicklungsmaßzahl von der Trennstelle hin zu der relativen Blattlänge von 90% zunimmt.

**Claims**

1. A rotor blade for a wind turbine, which rotor blade extends in the longitudinal direction from a blade connection to a blade tip with a variable profile depth, wherein

    - the rotor blade is divided at a separating point and has a separating point profile depth at the separating point,
    - a relative blade length of the rotor blade, starting from the blade connection, is defined in a blade length value range between 0% to 100%,
    - the separating point is arranged in a blade length value range between 25% and 50%,
    - a rotor blade section facing the blade connection and a rotor blade section facing away from the blade connection can be connected at this separating point for correct operation of the rotor blade,
    - a depth ratio which is composed of the variable profile depth and the separating point profile depth is defined, **characterized in that**:
    - a development index is defined as a gradient of the depth ratio in the direction of the relative blade length, and
- the development index in the region of the separating point is less than -1.

2. The rotor blade as claimed in claim 1, wherein

- the separating point is arranged in a blade length value range between 32% and 40%.

3. The rotor blade as claimed in the preceding claim, wherein

- the development index in the blade length value range between 25% and 50% is minimal in the region of the separating point.

4. The rotor blade as claimed in one of the preceding claims, wherein

- the development index in the region of the separating point lies in an index value range between -3 and -1, particularly preferably in an index value range between -2.5 and -2, and/or
- the development index in the blade length value range between 50% and 90%, in particular between 55% and 80%, has a rising value, and/or
- the development index in the blade length value range between 25% and 50% is less than -1.

5. The rotor blade as claimed in one of the preceding claims, wherein

- in the blade length value range between 60% and 80%, the development index lies in the index value range between -1.1 and -0.5.

6. The rotor blade as claimed in one of the preceding claims, wherein

- the development index decreases from the relative blade length of 20% toward the separating point, and/or
- the development index increases from the separating point toward the relative blade length of 90%.

7. The rotor blade as claimed in one of the preceding claims, wherein

- the depth ratio in the blade length value range between 5% and 20%, in particular between 10% and 20%, lies in a depth value range between 1.1 and 1.3, in particular between 1.15 and 1.25, and/or
- the depth ratio in the blade length value range between 90% and 100%, in particular between 95% and 100%, lies in a depth value range between 0.1 and 0.2, and/or
- the depth ratio in the blade length value range between 40% and 70% lies in a depth value range between 0.4 and 0.75.

8. The rotor blade as claimed in one of the preceding claims, wherein

- a minimum thickness of the rotor blade in the region of the separating point is at least 1.7 meters and/or
- a longitudinal extent of the rotor blade in the longitudinal direction is at least 40 meters.

9. A wind turbine having at least one rotor blade as claimed in one of the preceding claims.

10. A wind park having two or more wind turbines as claimed in claim 9.

11. A method for configuring a rotor blade which is divided in two, for a wind turbine, which rotor blade extends from a blade connection to a blade tip with a variable profile depth, wherein the rotor blade is divided in the longitudinal direction at a separating point and has a separating point profile depth at the separating point, a relative blade length of the rotor blade, starting from the blade connection, is defined in a blade length value range between 0% to 100%, a rotor blade section facing the blade connection and a rotor blade section facing away from the blade connection can be connected at the separating point for correct operation of the rotor blade, a depth ratio composed of the profile depth and the separating point profile depth is defined, comprising

- specifying the separating point in a blade length value range between 25% and 50%, and
- using a development index which is defined as a gradient of the depth ratio in the direction of the relative blade length, wherein the development index in the region of the separating point is less than -1.

12. The method as claimed in claim 11, wherein

- the development index in the blade length value range between 25% and 50% is minimal in the region of the separating point.

13. The method as claimed in one of claims 11-12, wherein the development index

- has a rising value in the blade length value range between 50% and 90%, in particular between 55% and 80%, and/or
- in the region of the separating point lies in an index value range between -3 and -1, particularly preferably in an index value range between -2.5 and -2.

14. The method as claimed in one of claims 11-13, wherein

    - in the blade length value range between 60% and 80%, the development index lies in the index value range between -1.1 and -0.5.

15. The method as claimed in one of claims 11-14, wherein

    - the development index decreases from the relative blade length of 25% toward the separating point, and/or

    the development index increases from the separating point toward the relative blade length of 90%.

**Revendications**

1. Pale de rotor pour une éolienne, qui s'étend dans la direction longitudinale à partir d'un raccord de pale vers un bout de pale avec une profondeur de profil variable, dans laquelle

    - la pale de rotor est divisée sur un point de séparation et présente une profondeur de profil de point de séparation sur le point de séparation,
    - une longueur de pale relative de la pale de rotor à partir du raccord de pale dans une plage de valeurs de longueur de pale comprise entre 0 % et 100 % est définie,
    - le point de séparation est disposé dans une plage de valeurs de longueur de pale comprise entre 25 % et 50 %,
    - une partie de pale de rotor tournée vers le raccord de pale et une partie de pale de rotor opposée au raccord de pale peuvent être reliées sur le point de séparation pour un fonctionnement conforme à l'usage prévu de la pale de rotor,
    - un rapport de profondeur résultant de la profondeur de profil variable et de la profondeur de profil de point de séparation est défini, **caractérisée en ce que** :

        - une cote de développement en tant que gradient du rapport de profondeur en direction de la longueur de pale relative est définie, et
        - la cote de développement dans la zone du point de séparation est inférieure à -1.

2. Pale de rotor selon la revendication 1, dans laquelle

    - le point de séparation est disposé dans une plage de valeurs de longueur de pale comprise entre 32 % et 40 %.

3. Pale de rotor selon la revendication précédente, dans laquelle

    - la cote de développement dans la plage de valeurs de longueur de pale comprise entre 25 % et 50 % est minimale dans la zone du point de séparation.

4. Pale de rotor selon l'une quelconque des revendications précédentes, dans laquelle

    - la cote de développement dans la zone du point de séparation se situe dans une plage de valeurs de cote de développement comprise entre -3 et -1, de manière particulièrement préférée dans une plage de valeurs de cote de développement comprise entre -2,5 et -2, et/ou
    - la cote de développement dans la plage de valeurs de longueur de pale comprise entre 50 % et 90 %, en particulier entre 55 % et 80 %, présente une valeur croissante, et/ou
    - la cote de développement dans la plage de valeurs de longueur de pale comprise entre 25 % et 50 % est inférieure à -1.

5. Pale de rotor selon l'une quelconque des revendications précédentes, dans laquelle

    - dans la plage de valeurs de longueur de pale comprise entre 60 % et 80 %, la cote de développement se situe dans la plage de valeurs de cote de développement comprise entre -1,1 et -0,5.

6. Pale de rotor selon l'une quelconque des revendications précédentes, dans laquelle

    - la cote de développement diminue à partir de la longueur de pale relative de 20 % en direction du point de séparation, et/ou
    - la cote de développement augmente à partir du point de séparation en direction de la longueur de pale relative de 90 %.

7. Pale de rotor selon l'une quelconque des revendications précédentes, dans laquelle

    - le rapport de profondeur dans la plage de valeurs de longueur de pale comprise entre 5 % et 20 %, en particulier entre 10 % et 20 %, se situe dans une plage de valeurs de profondeur comprise entre 1,1 et 1,3, en particulier entre 1,15 et 1,25, et/ou
    - le rapport de profondeur dans la plage de valeurs de longueur de pale comprise entre 90 % et 100 %, en particulier entre 95 % et 100 %, se situe dans une plage de valeurs de profondeur comprise entre 0,1 et 0,2, et/ou

- le rapport de profondeur dans la plage de valeurs de longueur de pale comprise entre 40 % et 70 % se situe dans une plage de valeurs de profondeur comprise entre 0,4 et 0,75.

8. Pale de rotor selon l'une quelconque des revendications précédentes, dans laquelle

    - une épaisseur minimale de la pale de rotor dans la zone du point de séparation atteint au moins 1,7 mètre et/ou

    - une étendue longitudinale de la pale de rotor dans la direction longitudinale atteint au moins 40 mètres.

9. Eolienne avec au moins une pale de rotor selon l'une quelconque des revendications précédentes.

10. Parc éolien avec deux, ou plus, éoliennes selon la revendication 9.

11. Procédé pour concevoir une pale de rotor divisée en deux pour une éolienne, qui s'étend dans la direction longitudinale à partir d'un raccord de pale vers un bout de pale avec une profondeur de profil variable, dans lequel la pale de rotor est divisée dans la direction longitudinale sur un point de séparation et présente une profondeur de profil de point de séparation sur le point de séparation, une longueur de pale relative de la pale de rotor à partir du raccord de pale dans une plage de valeurs de longueur de pale comprise entre 0 % et 100 % est définie, une partie de pale de rotor tournée vers le raccord de pale et une partie de pale de rotor opposée au raccord de pale peuvent être reliées sur le point de séparation pour un fonctionnement conforme à l'usage prévu de la pale de rotor, un rapport de profondeur résultant de la profondeur de profil et de la profondeur de profil de point de séparation est défini, comprenant

    - la fixation du point de séparation dans une plage de valeurs de longueur de pale comprise entre 25 % et 50 %, et

    - l'utilisation d'une cote de développement, qui est définie en tant que gradient du rapport de profondeur en direction de la longueur de pale relative, dans lequel la cote de développement dans la zone du point de séparation est inférieure à -1.

12. Procédé selon la revendication 11, dans lequel

    - la cote de développement dans la plage de valeurs de longueur de pale comprise entre 25 % et 50 % est minimale dans la zone du point de séparation.

13. Procédé selon l'une quelconque des revendications 11-12, dans lequel la cote de développement

    - présente dans la plage de valeurs de longueur de pale comprise entre 50 % et 90 %, en particulier entre 55 % et 80 %, une valeur croissante, et/ou

    - dans la zone du point de séparation se situe dans une plage de valeurs de cote de développement comprise entre -3 et -1, de manière particulièrement préférée dans une plage de valeurs de cote de développement comprise entre -2,5 et -2.

14. Procédé selon l'une quelconque des revendications 11-13, dans lequel

    - dans la plage de valeurs de longueur de pale comprise entre 60 % et 80 %, la cote de développement se situe dans la plage de valeurs de cote de développement comprise entre -1,1 et -0,5.

15. Procédé selon l'une quelconque des revendications 11-14, dans lequel

    - la cote de développement diminue à partir de la longueur de pale relative de 25 % en direction du point de séparation, et/ou

    - la cote de développement augmente à partir du point de séparation en direction de la longueur de pale relative de 90 %.

**Fig. 1**

Fig. 2

EP 3 735 530 B1

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014206670 A1
- WO 2010086297 A
- DE 102012206109 B3
- DE 102015116634 A1
- DE 102016201114 A1